**Europäisches Patentamt**

**European Patent Office**

**Office européen des brevets**

(11) Veröffentlichungsnummer: **0 031 540**
A2

# EUROPÄISCHE PATENTANMELDUNG

(21) Anmeldenummer: **80107939.3**

(22) Anmeldetag: **16.12.80**

(51) Int. Cl.³: **B 41 J 3/04**, C 03 C 3/08, C 03 C 3/30, C 04 B 37/00, C 04 B 41/06

(30) Priorität: **28.12.79 US 108109**

(43) Veröffentlichungstag der Anmeldung: **08.07.81** Patentblatt **81/27**

(84) Benannte Vertragsstaaten: **DE FR GB IT**

(71) Anmelder: **International Business Machines Corporation, Armonk, N.Y. 10504 (US)**

(72) Erfinder: **Humenik, James Noel, Pulling Road, LaGrangeville New York 12540 (US)**

(74) Vertreter: **Kirchhof, Norbert, Ing. grad., Schönaicher Strasse 220, D-7030 Böblingen (DE)**

(54) Schmelzbare Versiegelung auf Basis von Glas, insbesondere für eine Ladeelektrode eines Tintenstrahldruckers.

(57) Die schmelzbare Versiegelung besteht aus einer Glasschicht (50) aus einer gewichtsprozentualen Zusammensetzung von 56% $SiO_2$, 8% $Al_2O_3$, 8% $B_2O_3$, 6% BaO, 6% PbO, 6% $Na_2O$, 4% $ZrO_2$, 3% $Li_2O$ und 3% $La_2O_3$.

Diese Versiegelung ist verwendbar für die Ladeelektrode (32) eines Tintenstrahldruckers. Derartige Ladeelektroden (32) bestehen aus einer Aufeinanderschichtung keramischer Substrate (30), deren eine Stirnseite kammartig ausgebildet ist. Die übereinanderliegenden Nuten (33) der einzelnen Substrate (30) bilden Durchgänge für die einzelnen Tintenstrahlen. Die Kanten der einzelnen Nuten werden gabelförmig von einem Lademuster (34) umgeben. Dieses Lademuster (34) führt zur Anschlußseite (35, 36) auf der gegenüberliegenden Seite der Substrate. Das Lademuster (34) ist mit der schmelzbaren Versiegelung (50) überzogen, die außer der Versiegelung den Zweck hat, die einzelnen Substrate (30) zu einer einzigen Einheit (32) zu verbinden.

Die Glasschicht (50) wird in Form einer Grünschicht auf die einzelnen Substrate (30) aufgebracht. Diese Grünschicht enthält als Bindemittel Polyvinylbutyral und als Lösungsmittel Methylisobutylketon und Methanol. Zum Ausbrennen des Bindemittels wird der Schichtaufbau auf 800°C erhitzt und anschließend auf 1050°C, um ein Fließen oder eine Koaleszenz der Glaspartikel zu der Glasschicht (50) für eine Verbindung mit den Substraten (30) zu erzielen.

– 1 –

## Schmelzbare Versiegelung

Die Erfindung bezieht sich auf eine Ladeelektrode für einen Tintenstrahldrucker.

Mit der Tintenstrahl-Drucktechnik werden Zeichen durch den wahlweisen Aufschlag kleiner Tintentröpfchen auf dem zu beschriftenden Papier erzeugt. Für die Druckoperation ist ein Tintentröpfchenstrom hohen Druckes erforderlich, dessen einzelnen Tintentröpfchen durch eine Ladeelektrode wahlweise aufgeladen und hernach in einem elektrostatischen Feld abgelenkt werden, um auf diese Weise die zu druckenden Zeichen zu erzeugen. Da einige der verwendeten Tinten von Natur aus korrodierend wirken (z.B. sauer), müssen die verschiedenen Teile des Tintenstrahldruckers, die der Tinte ausgesetzt sind, entweder diesen Angriffen gegenüber widerstandsfähig sein oder müssen durch ein beständiges Material geschützt werden. Die Ladeelektroden, die wegen ihrer Nähe zum Tintenstrom dem Tintennebel konstant ausgesetzt sind, müssen deshalb gegenüber diesen Tinten beständig sein.

Typische Ladeelektroden für Tintenstrahldrucker sind in den US-Patentschriften 3 975 741 und 4 101 906 beschrieben. Es wurde vorgeschlagen, Glas als Abdeckplatte zur Abdichtung der unteren, aus einem metallisierten Substrat bestehenden Elektrode zu verwenden. Jedoch muß das als eine derartige Versiegelung verwendete Glas gewisse Kriterien erfüllen, und zwar 1. muß es beständig gegenüber der Tinte sein, weil das Glas in Berührung mit dem korrodierenden Tintennebel gelangt; 2. muß seine thermische Ausdehnung $\alpha$ verträglich sein mit der der Platte, weil das Glas zur Verkittung und Versiegelung dielektrischer Platten (z.B. Aluminium) verwendet wird; 3. und muß das Glas fähig sein zu fließen, um die Elektrode vollständig ohne der Bildung von Blasen zu umhüllen, die einen Lichtbogen erzeugen könnten, der zu vermeiden ist zwischen nahe voneinander beabstandeten Elektroden eines

FI 979 023

Elektrodenfeldes und wobei dieses Umhüllen erzielbar sein muß, ohne der Zerstörung der Glasfritte, die verwendet wird, um die aus metallischen Pasten gebildete Metallurgie zu verbinden und 4. muß zur Erleichterung der Herstellung das Glas fähig sein zu fließen und zurückzufließen ohne Kristallisation, so daß die Verbindung durch Kristalle nicht gehemmt wird.

Die Erfindung, wie sie in den Ansprüchen gekennzeichnet ist, löst die Aufgabe, bei einer Ladeelektrode eine Lichtbogenbildung zwischen den einzelnen Elektroden zu verhüten, bei einer verbesserten Beständigkeit gegenüber sauren Tinten, wobei die Wahl der Metallisation der Elektroden nicht auf eine saure Umgebung begrenzt ist.

Im folgenden wird die Erfindung anhand von in den Figuren veranschaulichten Ausführungsbeispielen näher erläutert.

Es zeigen:

Fig. 1          ein Schema eines Tintenstrahldruckers zur Darstellung der Umgebung der Erfindung,

Fign. 2A bis    verschiedene Herstellungsstufen einer Lade-
2C              elektrode,

Fig. 2D         ein Diagramm zur Veranschaulichung der Beständigkeit der verwendeten Glasversiegelung gegenüber anderen bekannten Glasarten und

Fign. 3 bis 6B verschiedene Herstellungsstufen anderer Ausführungsbeispiele einer Ladeelektrode.

Eine Abdichtung oder geschmolzenes Glas, entwickelt entsprechend der Erfindung, zum Verbinden und Versiegeln von Kompo-

FI 979 023

- 3 -

nenten einer Ladeelektrode hat die folgende gewichtsmäßige
Zusammensetzung und folgende thermische Eigenschaften:

$SiO_2$    -   56 %      $Na_2O$   -   6 %

$Al_2O$    -    8 %      $ZrO_2$   -   4 %

$B_2O_3$    -    8 %      $Li_2O$   -   3 %

$B_aO$    -    6 %      $La_2O_3$   -   3 %

$P_bO$    -    6 %

Deformierungspunkt,   $T_S$ = 484 °C,

Abkühlpunkt,         $T_A$ = 520 °C,

Erweichungspunkt,    $T_{SF}$ = 672 °C,

thermischer Ausdehnungskoeffizient $\alpha$ RT-300 °C = 70,6 x $10^{-7}$/°C.

Dieses Glas (hierin Ladeelektroden CE, Glas genannt) wurde
für verschiedene mit Rhodium metallisierte Aluminiumsubstrate
verwendet und floß bei 1050 °C, um eine im wesentlichen blasenfreie, die Metallurgie vollständig umhüllende Glasur zu
bilden. Diese Temperatur ist hoch genug, um einen guten Fluß
des CE-Glases zu erzeugen, jedoch niedrig genug für ein
Nichtzerstören der in den Metalleitungen (aus Metallpaste) befindlichen Glasfritte. Es wurde auch herausgefunden, daß
nach einem anfänglichen Fließen des CE-Glases auf dem
metallisierten Substrat das CE-Glas später rückfließen
kann, um eine integrierbare Verbindung zwischen dem metallisierten Substrat und der Abdeckplatte zu bilden. Zu keiner
Zeit wurde eine Kristallisation begegnet, die den Fließ-
und Rückfließvorgang verhindern würde.

In dem bevorzugten Ausführungsbeispiel wird das CE-Glas auf
das metallisierte Substrat in der Form einer 150 bis 200 µ
dicken Grünschicht mit 6 Gew.% Polyvinylbutyral-Bindelmittel
(gestützt auf kombiniertes Gewicht mit CE-Glaspartikeln von
ungefähr 5 bis 25 µ) nach Verdampfung von Methylisobutylketon
und Methanol aufgebracht, die als Lösungsmittel ursprünglich

FI 979 023

- 4 -

hinzugefügt wurden, um einen ausreichenden Fluß für das Gießen der Grünschicht in Übereinstimmung mit konventionellen Verfahren zu ermöglichen. Die CE-Grünschicht wird dann dem metallisierten Substrat überlagert und erhitzt bis auf 800 $^{o}$C, um den Binder auszubrennen, worauf eine Erhitzung auf 1050$^{o}$C erfolgt, um die Glaspartikel zum Fließen und zum Koaleszieren zum Glasüberzug, der mit dem Substrat verbunden ist, zu ermöglichen und die Metallurgie zu umhüllen. Eine Abdeckplatte wird dann auf dem Glasüberzug abgesetzt und die gesamte Einheit auf 1050 $^{o}$C erhitzt, um ein Verbinden der Deckplatte mit dem Substrat zu erreichen und gleichzeitig einen Schichtaufbau zu erzeugen.

Das CE-Glas wurde mit anderen Glasarten verglichen durch Test in saurer Tinte (pH = 6 bis 7) bei 70 $^{o}$C für bis zu 192 Stunden. Diese Glasarten werden A-192 Glas genannt und sind von einer Zusammensetzung aus 55 bis 58 Gew.% $SiO_2$, 17 bis 22,5 Gew.% $ZrO_2$, 16 bis 17 Gew.% $Na_2O$, 2 bis 3 Gew.% $K_2O$, 3 bis 5 Gew.% MgO, 0 bis 1 Gew.% $Al_2O_3$ und 0 bis 2,5 Gew.% CaO (wie in der US-Patentschrift 4 122 460 beschrieben); das Corning C7280-Glas weist folgende gewichtsprozentuale Zusammensetzung auf:

| C-7280 | | | |
|---|---|---|---|
| $SiO_2$ | 71 | $K_2O$ | 0,5 |
| $Al_2O_3$ | 1 | $Li_2O$ | 1 |
| $BrO_2$ | 15 | | |
| $Na_2O$ | | | |

Das Corning C-7740 Pyrex-Glas weist folgende gewichtsprozentuale Zusammensetzung auf:

| C-7740 | |
|---|---|
| $SiO_2$ | 81 |
| $Al_2O_3$ | 2 |
| $B_2O_3$ | 13 |
| $Na_2O$ | 4 |

FI 979 023

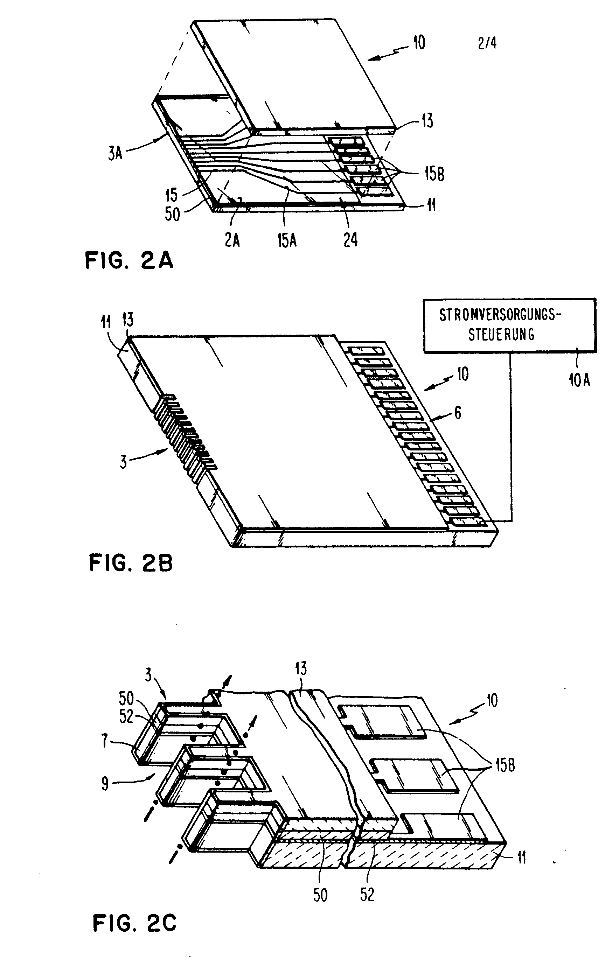

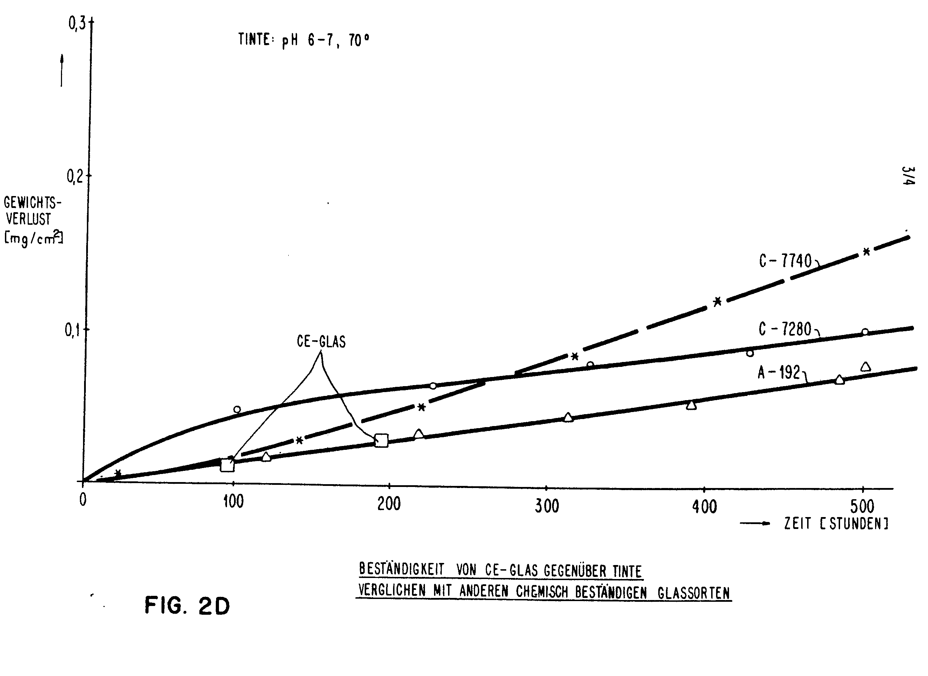

Die Ergebnisse sind in Fig. 2D dargestellt, **aus der er-**sichtlich ist, daß das CE-Glas der Erfindung widerstandsfähiger gegen saure Tinte ist als das C7280 und C7740 Glas, die handelsübliche Glasarten mit guten Beständigkeiten sind.

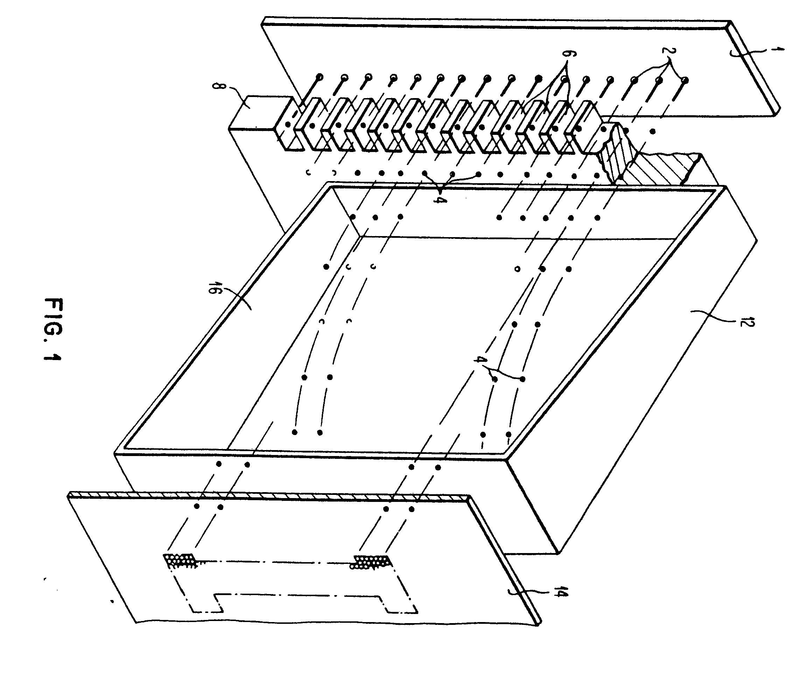

In Fig. 1 ist ein Schema eines Tintenstrahldruckers veranschaulicht, der die Düsenplatte 1 mit einer Vielzahl von Düsen 2 aufweist, durch die unter Druck stehende, elektrisch leitende Tintenströme ausgestoßen werden. Die Tinteströme werden in Schwingungen versetzt, beispielsweise durch piezoelektrische Elemente, so daß die kontinuierlichen Tintenströme einer jeden Düse in einzelne Tintentröpfchen 4 aufgelöst werden, die gleiche Größe und einen einheitlichen Abstand voneinander aufweisen.

Die Ladeplatte 8 weist eine Mehrzahl von Ladeelektroden 6 auf, die in der Flugbahn der Tintentröpfchen liegen. Von der Stromversorgung 10A (Fig. 2B) wird wahlweise den Ladeelektroden 6 ein Potential zugeführt, so daß die Tintentröpfchen in dem von den Ladeelektroden gebildeten elektrischen Feld kapazitiv geladen oder nicht geladen werden, entsprechend dem den einzelnen Elektroden zugeführten Potential zur Zeit des Vorbeifliegens der Tintentröpfchens an der jeweiligen Elektrode.

Die geladenen oder ungeladenen Tröpfchen passieren auf ihrer weiteren Flugbahn ein durch die Ablenkplatte 12 erzeugtes elektrisches Feld. Die letztere liegt zwischen einem Bezugspotential, beispielsweise Erde und einem relativ hohen positiven Potential (nicht gezeigt). Das von der Ablenkplatte 12 erzeugte elektrische Feld verursacht eine Ablenkung derjenigen Tintentröpfchen, die zuvor positiv geladen wurden, so daß diese Tintentröpfchen aus ihrer natürlichen Flugbahn heraus abgelenkt werden und somit nicht gegen das zu bedruckende Papier 14 aufschlagen. Diese abgelenkten Tintentröpfchen werden in der Tintenauffangblende 16 ge-

FI 979 023

sammelt, die mit der Ablenkplatte 12 kombiniert sein kann. Auf diese Weise wird die nicht benötigte Tinte aufgefangen und steht für eine Wiederverwendung zur Verfügung.

Die ungeladenen Tintentröpfchen werden auf ihrer natürlichen Flugbahn nicht abgelenkt und gelangen somit auf das zu bedruckende Papier 14. Eine Relativbewegung zwischen den für den Druck benötigten Tintentröpfchen und dem zu bedruckenden Papier ermöglicht das Aufzeichnen von Schriftzeichen oder anderer gewünschter Information.

In den Fign. 2A bis 2C ist die Ladeplatte 10 dargestellt, deren eine Seite 3 Zungen 7 und Nuten 9 aufweist, die U-förmige Durchgänge für die Tintenstrahlen bilden.

Die Ladeplatte besteht in der in den Fign. 2A bis 2C gezeigten Form aus der dielektrischen Grundschicht 11 und der Abdeckplatte 13. In einer bevorzugten Ausführungsform bestehen die dielektrische Grundschicht 11 und die Abdeckplatte 13 aus Aluminium-Keramiksubstraten, die zwischen 96 bis 99 Gew.% $Al_2O_3$ enthalten. Auf die eine Seite der Grundschicht 11 ist das ebene Elektrodenmuster 24 durch geeignete Verfahren aufgebracht. Dieses Elektrodenmuster ist erstellbar, durch Siebdruck mittels einer geeigneten Metallpaste, die metallische Partikel, beispielsweise Rhodium oder Platin oder dgl. und Partikel eines Glasbinders, beispielsweise Corning 7280-Glas enthält. Es ist natürlich auch möglich, das Elektrodenmuster durch Aufsprühen oder Plattieren mittels eines geeigneten elektrisch leitenden Materiales zu erzeugen mittels einer nachfolgenden, nicht gezeigten Erstellung einer Schicht aus einem photosensitiven Maskenmaterial. Geeignete Elektrodenmuster 24 sind dann mittels photolithographischer Maskenverfahren und anschließendem Ätzen der nicht abgedeckten metallischen Schicht erzeugbar, wodurch das Elektrodenmuster 24 übrigbleibt, von dem anschließend das Maskenmaterial entfernt wird. In der ge-

- 7 -

zeigten Form weist das Elektrodenmuster an der Kante 3A der Grundschicht 11 Ladeteile 15 auf mit ausgespreizten Leitungsteilen 15A, die zu den Elektrodenanschlußteilen 15B sich erstrecken, wodurch die Elektroden mit der externen Schaltung (z.B. 10A) verbindbar sind.

Zum Zwecke der Isolation ist das Elektrodenmuster 24 mittels eines geeigneten Verfahrens mit der dieelektrischen Isolierschicht 50 überzogen, die aus CE-Glas bestehen kann. In Übereinstimmung mit einem weiter oben beschriebenen Verfahren kann die CE-Glasschicht 50 durch eine CE-Grünschicht dargestellt werden, die ein Anstrich bilden kann mit einer gewichtsprozentualen Zusammensetzung von 48 % CE-Glas-Partikeln oder einer Fritte in der Größenordnung von 5 bis 25 $\mu$, 6 % B-98-Binder und 33 und 11 % Methylisobutylketon bzw. Methanol als Binderbestandteile in Verbindung mit geringen Mengen von Weichmachern, Konditioniermitteln usw. Die Anstrichzusammensetzung kann dann in einem Brei von 100 bis 200 $\mu$ Dicke gegossen werden auf einer Tragfläche, worauf das Aufdampfen der Lösung erfolgt, um die Grünschicht zu bilden. Die Grünschicht befindet sich auf der Grundschicht 11 über dem Elektrodenmuster aus Isolierschicht 2A. Diese Einheit wird dann auf 1050°C erhitzt, um den Grünschichtbinder auszubrennen und ein Fließen oder eine Koaleszenz der CE-Glaspartikel zu der CE-Glasschicht 50 für eine Verbindung mit der Grundschicht 11 zu erzielen. Die Anfangserhitzung erfolgt vorzugsweise so, daß das Entfernen der Zersetzungsprodukte vom Binder verhindert wird.

Die Elektrodeneinheit wird dann vollständig von der Abdeckplatte 13 auf der Glasschicht 50 abgedeckt, derart, daß die Anschlußteile 15B der Elektroden frei bleiben, worauf sich ein Erhitzen auf 1050 °C anschließt, damit die CE-Glasschicht zu einer Verbindung mit der Abdeckplatte 13 zurückfließt. Die Kante 3A wird durch ein geeignetes Verfahren ausgezackt, beispielsweise mittels einer nicht ge-

FI 979 023

- 8 -

zeigten Vielfachsäge.

Zum Schutze der freien Teile der Elektroden in den Nuten 9 der Auszackung wird eine 1000 Å dicke leitende Schicht 52 aus einem Edelmetall, wie Rhodium oder Platin, abgelagert auf der Seite und den Endwänden in den Nuten 9 (beispielsweise durch Aufsprühen oder durch Aufdampfen).

Die Anschlußteile 15B der Elektroden können dann durch geeignete Steckverbindungen oder Drahtverbindungen mit den Ladeelektroden-Treiberschaltungen verbunden werden.

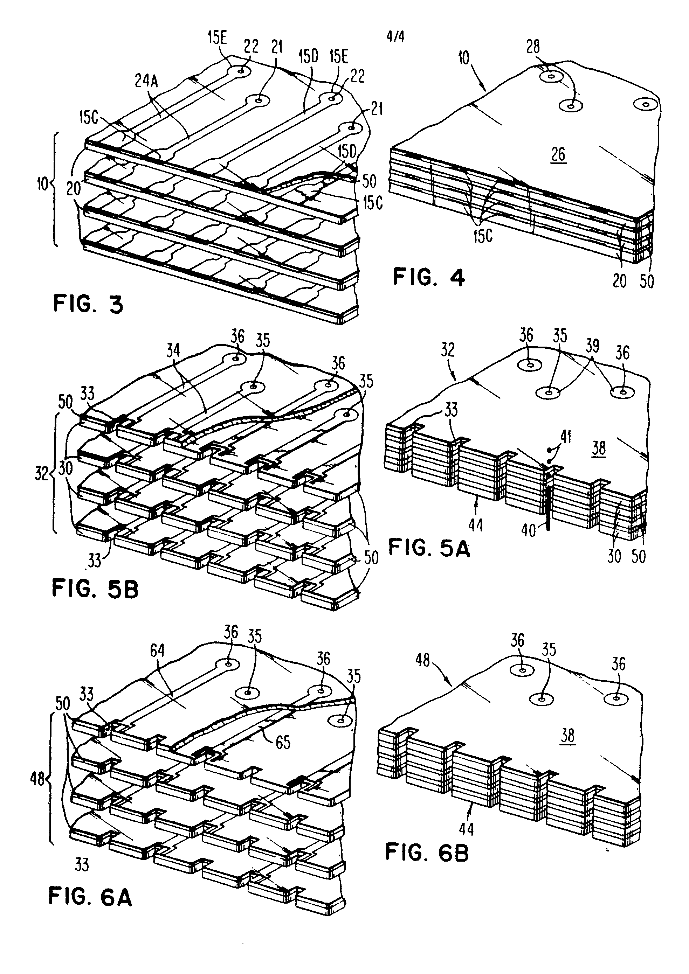

Die Fign. 3 bis 6B zeigen Herstellungsschritte eines vielschichtigen Elektrodenaufbaues. In Fig. 3 wird eine Mehrzahl von dielektrischen Schichten 20 mit einer Vielzahl von gelochten oder geschnittenen Löchern 21 und 22 versehen. Das Elektrodenmuster 24 wird dann auf der entsprechenden Fläche der dielektrischen Schicht 20 durch geeignete Verfahren abgelagert. Das Elektrodenmuster besitzt den Ladeteil 15C, den Leitungsteil 15D und den Anschlußteil 15E. Die CE-Grünschicht wird dann erfindungsgemäß auf der dielektrischen Schicht über dem Elektrodenmuster aufgebracht und erhitzt zum Ausbrennen des Binders und zum Fließen der CE-Glaspartikel in die CE-Glasschicht 50, die mit den Schichten verbunden ist (in Fign. 3 oder 4 nicht gezeigt).

Eine Mehrzahl von glasbedeckten, dielektrischen Schichten wird aufeinandergestapelt (z.B. eine mit Muster versehene Seite zugewandt einer Seite ohne Muster oder eine glasbedeckte Seite zugewandt einer nicht glasbedeckten Seite), so daß die Ladeelektrodenteile 15C und die Löcher 21 und 22 miteinander ausgerichtet sind. Dieser Stapel kann dann mit der Schicht 26 bedeckt werden, welche den Schichten 20 mit den Löchern 21 und 22 identisch ist, jedoch mit keinem Elektrodenmuster und metallischen Leitern 24A versehen ist. Dieser Stapel kann dann erhitzt werden, um einen Rückfluß des CE-Glases zur Verbindung der übereinandergelagerten

FI 979 023

- 9 -

Schichten zu ermöglichen. Die Löcher 21 und 22 können dann mit einem Füllmaterial 28 ausgefüllt werden, das gleichzeitig mit der Bildung des Elektrodenmusters ausgeführt werden kann, wenn dasselbe durch Verwendung einer Metallpaste, die vor dem Erhitzen auf die grünen, dielektrischen Schicht aufgebracht wird, gebildet wird. Die Führungskante 3B der integrierten Elektrodeneinheit kann ausgezackt werden, in die in Fig. 5B gezeigte Form mittels Sägen, worauf sich ein Niederschlagen einer Schutzschicht aus Rhodium an den Seiten und Endwänden der U-förmigen Nuten anschließt.

Die Fign. 5 bis 6B zeigen Herstellungsschritte, bei denen das Elektrodenmuster nicht frei ist an den Druchgangsstellen für den Tintenstrahl, jedoch im Gegensatz von den Öffnungen beabstandet ist. Hier können die dielektrischen Schichten 30, welche die Ladeplatteneinheit 32 bilden, vorgeschnittene Nuten 33 entlang einer Kante einer jeden Schicht 30 aufweisen. Das Ladeelektrodenmuster 34 weist eine gabelförmige Form auf und umgibt mit Abstand die Nuten 33. Wie in den anderen Ausführungsbeispielen befindet sich auf der dielektrischen Schicht 30 eine CE-Grünschicht, die erhitzt wird, um den Binder auszubrennen und ein Fließen des CE-Glases in eine mit einer jeden dielektrischen Schicht 30 verbundene elektrische Isolierschicht über dem Elektrodenmuster 34 zu ermöglichen. Die Schichten werden dann übereinandergestapelt mit einer obersten Schicht 38 mit geeigneten Nuten 33 und Löchern 35 und 36, jedoch ohne einem Elektrodenmuster. Die glasüberzogenen Schichten 30 und 38 werden dann gegeneinander ausgerichtet und erhitzt, um ein Rückfließen des CE-Glases in eine Verbindung mit den übereinanderliegenden Schichten zu erzielen. Die Löcher 35 und 36 sind elektrisch miteinander verbunden, um Anschlüsse für die Verbindung mit einer Ladespannungsquelle zu bilden. Da die Ladeelektrodenteile 15C durch die Nuten 33 voneinander beabstandet sind, sind sie von der CE-Glasschicht umhüllt, so daß die Nutwände keinen Schutzüberzug benötigen.

FI 979 023

Wie aus den Fign. 5A und 5B hervorgeht, bilden die Nuten 33 eine einzige Reihe von Öffnungen. Zum Zwecke der besseren Darstellung ist lediglich einer der Tintenstrahlen einer der Düsen dargestellt in Form eines Fadens 40 und einzelner Tröpfchen 41, die gerade durch die genutete Ladeelektrode 33 in der Ladeplatte 32 hindurchfliegen. Für einen zweireihigen Tintenstrahlkopf können entweder zwei Ladeelektrodenplatten 32 verwendet werden oder es muß das Ladeelektrodenmuster 34 abwechselnd mit verschiedener Tiefe von der Kante 44 der Ladeplatte 32 (Fign. 6A und 6B) angeordnet sein. Auf jeden Fall ist das Plattieren der Löcher 35 und 36 mit elektrisch leitendem Material auszuführen, um die Anschlüsse 39 zur Verbindung des Ladeelektrodenmusters 34 mit der zugeordneten Schaltung vorzusehen.

Bei dichten Anordnungen, bei denen die Tintenströme nur eng voneinander beabstandete Flugbahnen aufweisen, ist eine elektrische Trennung durch Abstufung des Elektrodenmusters 64 und 65 (Fig. 6A) erzielbar. Das Nuten der Einheit, das Ausrichten und Laminieren der Ladeplattenkomponenten ist identisch mit dem bezüglich der Fign. 5A und 5B beschriebenen Verfahren, um den laminierten Aufbau der Fig. 6B zu erreichen.

Obwohl die Herstellung für eine Ladeplatteneinheit eines Tintenstrahldruckers beschrieben wurde, kann die Erfindung auch für andere Zwecke Verwendung finden. Unter diese Anwendungen fällt auch der Gebrauch von CE-Glas als Glasur von Aluminiumsubstraten, auf welche dünne Filme aufgebracht sind. Hier ist ein guter Fluß erforderlich, um glatte porenfreie Glasuren zu ergeben und eine chemische Beständigkeit ist erforderlich, da derartige Substrate des öfteren einer chemischen Behandlung während Eloxierens von Kondensatoren unterzogen werden. Da das CE-Glas thermisch verträglich ist mit Aluminium, kann es verwendet werden als säurebeständiges Glasurglas für eine Unzahl von Anwendungen.

FI 979 023

- 11 -

P A T E N T A N S P R Ü C H E

1. Schmelzbare Versiegelung, gekennzeichnet durch eine schmelzbare Glasschicht (50), bestehend aus einer gewichtsprozentualen Zusammensetzung von 56 % $SiO_2$, 8 % $Al_2O_3$, 8 % $B_2O_3$, 6 % BaO, 6 % PbO, 6 % $Na_2O$, 4 % $ZrO_2$, 3 % $Li_2O$ und 3 % $La_2O_3$.

2. Schmelzbare Versiegelung nach Anspruch 1, dadurch gekennzeichnet, daß sie einen dielektrischen Körper (11) überzieht.

3. Schmelzbare Versiegelung nach Anspruch 2, dadurch gekennzeichnet, daß der dieelektrische Körper (11) ein auf Aluminium basierendes, keramisches Substrat ist.

4. Schmelzbare Versiegelung nach Anspruch 2 oder 3, dadurch gekennzeichnet, daß der dielektrische Körper (11) mit einem elektrischen Leitermuster (15) überzogen ist, das von der Glasschicht (50) bedeckt ist.

5. Schmelzbare Versiegelung nach Anspruch 1, dadurch gekennzeichnet, daß die Glasschicht (50) zwei dielektrische (11, 13) Körper miteinander verbindet.

6. Schmelzbare Versiegelung nach Anspruch 5, dadurch gekennzeichnet, daß zwischen den beiden dielektrischen Körpern (11, 13) sich das elektrische Leitermuster (15) befindet.

7. Schmelzbare Versiegelung nach Anspruch 6, dadurch gekennzeichnet, daß die beiden dieelektrischen Körper (11, 13) aluminiumkeramische Substrate sind.

8. Schmelzbare Versiegelung nach Anspruch 2, dadurch gekennzeichnet, daß ein elektrisches Leitermuster (15) mittels der Glasschicht (50) mit dem dielektrischen Körper (11) verbunden ist.

FI 979 023

- 12 -

9. Schmelzbare Versiegelung für eine **Ladeelektrode eines** Tintenstrahldruckers, gekennzeichnet durch ein Paar zusammenpassende keramische Substrate (30), von denen ein jedes eine kammartig ausgebildete Seite aufweist, durch ein leitendes Lademuster (34) auf dem ersten Substrat, das die Kanten der einzelnen Nuten der kammartigen Seite gabelförmig umgibt und durch einen Überzug aus der schmelzbaren Versiegelung, der wenigstens mit den gabelförmigen Teilen des Lademusters und dem ersten Substrat verbunden ist und das zweite Substrat mit dem ersten verbindet, wobei zwischen den beiden Substraten das Lademuster sich befindet.

10. Ladeelektrode nach Anspruch 10, gekennzeichnet durch eine Vielzahl von dielektrischen Schichten (30), von denen eine jede Nuten (33) für den Durchgang je eines Tintenstrahles aufweist, durch eine Vielzahl von ebenen Ladeelektroden, die zwischen benachbarten Paaren der dieelektrischen Schichten (30) angeordnet sind und durch die schmelzbare Versiegelung, die die einzelnen Schichten zusammenhält und die Elektroden umhüllt.

11. Verfahren zur Herstellung der Versiegelung nach einem der vorgenannten Ansprüche, dadurch gekennzeichnet, daß die Glasschicht in Form einer Grünschicht, die Polyvinylbutyral als Bindemittel und Methylisobutylketon und Methanol als Lösungsmittel enthält, auf das Substrat nach Verdampfen des Lösungsmittels aufgebracht wird, und zum Ausbrennen des Bindemittels auf 800 $^{\circ}$C und anschließend auf 1050$^{\circ}$C erhitzt wird, um ein Fließen oder eine Koaleszenz der Glaspartikel zu der Glasschicht für eine Verbindung mit dem bzw. den Substraten zu erzielen.

FI 979 023

FIG. 1

0031540

2/4

**FIG. 2A**

**FIG. 2B**

STROMVERSORGUNGS-
STEUERUNG

**FIG. 2C**

TINTE: pH 6-7, 70°

0,3

0,2

GEWICHTS-
VERLUST
[mg/cm²]

0,1

CE-GLAS

C-7740

C-7280

A-192

0        100        200        300        400        500

ZEIT [STUNDEN]

BESTÄNDIGKEIT VON CE-GLAS GEGENÜBER TINTE
VERGLICHEN MIT ANDEREN CHEMISCH BESTÄNDIGEN GLASSORTEN

FIG. 2D

**FIG. 3**

**FIG. 4**

**FIG. 5A**

**FIG. 5B**

**FIG. 6A**

**FIG. 6B**

IBM-FI 979 023